# EUROPEAN PATENT APPLICATION

(11) **EP 2 735 845 A1**
(43) Date of publication of application: **28.05.2014**
(21) Application number: 12194137.1
(22) Date of filing: 23.11.2012
(51) Int. Cl.: G01C 21/36

(54) **Personal guide system providing spoken information on an address based on a line of interest of a user**

(71) Applicant: GN Store Nord A/S, 2750 Ballerup (DK)
(72) Inventor: Jensen, Jakob, 2650 Hvidovre (DK); Mossner, Peter, 2770 Kastrup (DK); Sorensen, Peter Schou, 2500 Valby (DK); Urup, Kathrine Steen, 2500 Valby (DK); Johansen, Lars Klint, 2500 Valby (DK)
(74) Representative: Zacco Denmark A/S

(57) **Abstract**

The invention relates to a personal guide system for use in a geographical environment, the personal guide system comprising a hearing device configured to be head worn and having at least one speaker for emission of sound towards at least one ear of a user and accommodating an orientation unit for estimating a current orientation of a user's head when the user wears the hearing device in its intended operational position on the user's head. It further has a geographical position unit configured to estimate a geographical position of the personal guide system and a computational unit configured for retrieving at least one address with an address record in the vicinity of the geographical position, estimating a line of interest for the user in the geographical environment and establishing at least one address as a best estimate along the line of interest for the user and the at least one address with an address record in the vicinity of the geographical position, and controlling a sound generator to output audio signals with spoken information about the at least one address.

## Description

### Field of invention

The present invention relates to a personal guide system for use in a geographical environment, especially to a personal guide system comprising a head worn hearing device, and especially to a system configured to control a sound generator to output audio signals with spoken information about at least one address for a user.

### Background of the invention

Typically, present GPS-units guide a user towards a desired destination using visual and audible guiding indications. For example, present GPS-units typically display a map on a display screen that includes the current position of the user, typically at the centre of the displayed map, and a suitable route drawn on the displayed map towards a desired destination accompanied by spoken instructions, such as "turn left at the next junction".

Conventional GPS-units typically include a database with a variety of particular locations denoted Points-of-interest (POIs). POIs are typically shown on the map with an icon indication the particular type of the POI in question at the geographical position of the POI.

Typically, POI categories include: Restaurants, Hotels, Shopping Centres, Industrial Estates, Police Stations, Post Offices, Banks, ATMs, Hospitals, Pharmacies, Schools, Churches, Golf Courses, Low Bridges, Historic Sites, Camping & Caravan Sites, etc.

Typically, the POI database includes information on POIs, such as the type of POI, the name of the POI, longitude and latitude of the POI, the address of the POI, possible phone numbers, etc.

Some conventional GPS-units are configured for containing audio tours guiding the user along a specific route with MP3 audio files associated with respective POIs along the route and played automatically when the GPS-unit is within a certain distance from the POI in question. The audio tours with MP3 audio files are downloaded into the GPS-unit beforehand.

GPS units will provide coordinates of a geographical position. Although precise, the coordinates do not make sense to a user who navigates in a local environment with streets, houses, blocks or in a warehouse with its own organised structure.

### Summary

It is an objective of the present invention to provide a system that makes it easier for a user to navigate in a local environment.

According to one aspect of the present invention a personal guide system for use in a geographical environment is provided. The personal guide system comprising a hearing device configured to be head worn and having at least one speaker for emission of sound towards at least one ear of a user and accommodating an orientation unit for estimating a current orientation of a user's head when the user wears the hearing device in its intended operational position on the user's head. It further comprises
a geographical position unit configured to estimate a geographical position of the personal guide system,
a computational unit configured for retrieving at least one address with an address record in the vicinity of the geographical position. The computational unit is further configured for estimating a line of interest for the user in the geographical environment and establishing at least one address as a best estimate along the line of interest for the user and the at least one address with an address record in the vicinity of the geographical position, and controlling a sound generator to output audio signals with spoken information on the selected address.

Thus, a hearing device is provided that is configured to be head worn by a user for emission of sound towards at least one of the ears of the user, and accommodating an orientation unit. The orientation unit may be positioned for determining yaw of the orientation of the head of the user, when the user wears the hearing device in its intended operational position on the user's head.

The hearing device has one or more loudspeakers for emission of sound towards one or both ears of the user when the hearing device is worn by the user in its intended operational position on the user's head. It should be noted that in the field of hearing aids, the loudspeakers are termed receivers.

The hearing device may be an Ear-Hook, In-Ear, On-Ear, Over-the-Ear, Behind-the-Neck, Helmet, Headguard, etc, headset, headphone, earphone, ear defenders, earmuffs, etc. Further, the hearing device may be a binaural hearing aid, or a monaural hearing aid, such as a BTE, a RIE, an ITE, an ITC, a CIC, etc, monaural or binaural hearing aid.

The new hearing device may have a headband carrying one or two earphones. The headband is intended to be positioned on the top of the head of the user as is well known from conventional headsets and headphones with one or two earphones.

The orientation unit may be accommodated in the headband of the hearing device. The new hearing device may have a neckband carrying one or two earphones. The neckband is intended to be positioned behind the neck of the user as is well-known from conventional neckband headsets and headphones with one or two earphones.

The orientation unit may be accommodated in the neckband of the hearing device.

The orientation of the head of the user is defined as the orientation of a head reference coordinate system with relation to a reference coordinate system with a vertical axis and two horizontal axes at the current location of the user.

A head reference coordinate system is defined with its centre located at the centre of the user's head, which is defined as the midpoint of a line drawn between the respective centres of the eardrums of the left and right ears of the user.

The x-axis of the head reference coordinate system is pointing ahead through a centre of the nose of the user, its y-axis is pointing towards the left ear through the centre of the left eardrum, and its z-axis is pointing upwards.

Head yaw is the angle between the current x-axis' projection onto a horizontal plane at the location of the user and a horizontal reference direction, such as Magnetic

North or True North, head pitch is the angle between the current x-axis and the horizontal plane, and head roll is the angle between the y-axis and the horizontal plane. Throughout the present disclosure, the x-axis, y-axis, and z-axis of the head reference coordinate system, are denoted the head x-axis, the head y-axis, and the head z-axis, respectively.

The orientation unit may comprise accelerometers for determination of displacement of the hearing device.

The orientation unit may determine head yaw based on determinations of individual displacements of two accelerometers positioned with a mutual distance for sensing displacement in the same horizontal direction when the user wears the hearing device. Such a determination is accurate when head pitch and head roll do not change during change of the yaw value.

Alternatively, or additionally, the orientation unit may determine head yaw utilizing a first gyroscope, such as a solid-state or MEMS gyroscope positioned for sensing rotation of the head x-axis projected onto a horizontal plane at the user's location with respect to a horizontal reference direction.

Similarly, the orientation unit may have further accelerometers and/or further gyroscope(s) for determination of head pitch and/or head roll, when the user wears the hearing device in its intended operational position on the user's head.

In order to facilitate determination of head yaw with relation to e.g. True North or Magnetic North of the earth, the orientation unit may further include a compass, such as a magnetometer.

Thus, the orientation unit may have one, two or three axis sensors that provide information of head yaw, head yaw and head pitch, or head yaw, head pitch, and head roll, respectively.

The orientation unit may further have sensors that provide information on one, two or three dimensional displacement.

The retrieved address may be a specific address or a selected address based on choice amongst more addresses.

In one or more embodiments, the at least one address having an address record is retrieved from an address archive.

An archive may be an organised set of data specifying or defining an address. An archive may be organised as one or more databases stored locally, remotely or distributed.

The personal guide system may be configured to handle an address where the address archive is a postal address archive, a matriculate address archive, a communications network address archive, an IP address archive, a fixed line telephone address archive, a mobile phone address archive, a warehouse storage address archive, a utility archive, a road map archive, a building map archive, or any other systematically organised archive.

In an embodiment the address archive is obtained by retrieving and implementing geographical databases. In another embodiment the address archive is stored remotely and accessed by communication and addresses are retrieved by look-up.

A person skilled in the art will appreciate public or licensed databases from Internet sites such as GeoNames (www.geonames.org) and alike.

A person skilled in the art will also appreciate private databases specially compiled and even establish and compile an address database from scratch.

One such example could be in indoor such as a warehouse with specific areas, cubicles, storage sections, boxes etc. One example could be a warehouse with a container stored in a section with roads organised as rows (A, B, C, ...) and (I, II, III, ...) and levels (1, 2, 3). A

A similar implementation could be in a cargo vessel such as a container ship.

According to one or more embodiments the personal guide system further comprises a retrieval system configured to access at least one address record archive linked to the address archive and containing at least one address record pertaining to an address, and hence providing access to a deeper level of information about the particular address. It is understood that for a particular address there may be a record with information associated to that particular address.

This address record may be stored along with the address itself or the address record may be a separate address record archive preferably in the form of a database.

For each address archive multiple address record archives may be configured to be accessible and means for selecting or switching between the archives may be implemented by use of pointers to each address record archive.

A record archive is typically structured data of a particular category. A category may be personal information, price, hazardous, classified, statistical or alike.

In one or more embodiments the address record archive is a personal record archive, a phone directory archive, a land registry archive, etc.

Thus having an address, this address may be used to look-up the name of the resident or the owner of that address for example. The address may also be used to look-up a phone number from a phone directory. The address may also be used to lookup land registry data including building and utility information associated with that particular address.

In one or more embodiments the processor uses an iterative process to estimate whether the line of interest intersects with a point that corresponds to an address; preferably using a reverse geocoding algorithm.

The person skilled in the art will appreciate the technicalities relating to interpret a geographical position to an address (or the reverse problem of associating an address with a geographical position).

Methods for changing between geographical positions and addresses are generally known as reverse geocoding (from a geographical position to an address) or geocoding (from an address to a geographical position).

The person skilled in the art will appreciate the existence of geocoding systems and standards.

Also the person skilled in the art will know to respect privacy regulations associated with compiling and processing data.

Reverse geocoding may be performed when a GPS or a GIS (Geographical Information System) coordinate is entered and an address is interpolated from a range assigned to say a road segment in a reference dataset that the point is nearest to.

If a coordinate near the midpoint of a segment that starts with 1 and ends with 100, the returned street address will be somewhere near 50.

This approach to reverse geocoding does not return actual addresses, it only estimates of what should be there based on the predetermined range. Alternatively, coordinates for reverse geocoding can also be selected on an interactive map.

The interpolation may be cross-referenced and or further interpolated in a local GIS based on for example a mobile antenna network or local wireless networks such as a network of Wi-Fi, etc.

Algorithms for reverse geocoding may are well known in the art and will not be described in further detail. A person skilled in the art will appreciate the continuous development and refinement of such algorithms and be inspired to make use of the best and/or most suitable algorithm.

Some experimentation and test of different algorithms will help selecting the most suitable algorithm.

In one or more embodiments the at least one computational unit may further be configured for retrieving an address record and generating an audio signal with spoken information of the address record.

Thus, the embodiment provides the information in the address record in a readily available format that does not require the use of hands or sight.

The transformation of information in the address record or the address can be done by using a text to speech translation code implemented in the computational unit.

For some address records some pre-processing or filtering of data may be required and typically be extracting subsets of information from the record and bring the text-strings into a required format.

In an exemplary embodiment there is a choice of language of the text to speech processor.

Improvements in text to speech codes are continuous and the person skilled in the art will appreciate this and by test and comparison be able to choose amongst the available codes and processor implementations.

In one or more embodiment the at least one computational unit is further configured for sounding an alarm when a specific address is within a threshold distance of a predetermined address.

Thereby the embodiment of the invention may be further advantageous in providing a notification of the presence or nearby presence of an address.

In one or more embodiments, a predetermined address and a predetermined distance of for example 500 m is entered into the system and when the user wearing the personal communication system is within a 500 m radius of the address, a sound, such as a beep, is sounded. In one or more implementations, the beep is sounded so as to indicate the direction of the address and the strength of the sounding may reflect the distance from the current location to the address.

In one or more embodiments the at least one computational unit is further configured for sounding a guiding signal that will guide the line of interest towards or around a predetermined address.

A guiding signal can be "look to the left", "look towards 10 o'clock", "turn around", etc.

Hereby, the embodiment may further improve navigation from a current position to a destination, i.e. the predetermined address.

In a particular embodiment the sounding is designed to guide away from an address.

Ways of sounding towards an address is by sounding directions (such as left, right) or sounds that are increasingly pleasing or increasing in intensity as the address is approached. Contrary ways of sounding away from an address may be provided by sounding directions (such as right, left) or sounds that are disharmonic or for example increasing in intensity/or disharmony as the address approaches the unwanted address.

In some embodiments, a non-linear intensity is used to reflect distance. In this way an address may be on the radar from a long distance and appear louder and detailed as required to navigate in the vicinity of the address.

In one or more embodiments, the predetermined address is provided to the personal guide system by speech recognition system embedded or interacting with the computational unit.

Thereby spoken instructions to the system may be made and information about or confirmation of an address may be made.

A person skilled in the art will appreciate the usage of speech recognition software and required processor power. In a similar vein as outlined about the text to speech algorithms, it is recognised that speech recognition algorithms continuously improve and that some experimentation with different solutions is needed.

In one or more embodiments the personal guide system further comprises an address confirmation unit configured to confirm an address given by a user input; such as based on an actual address.

This will allow a user to confirm that the identified address is actually correct - or incorrect for that matter. This will improve the reliability of the system and using learning techniques the confirmation unit or underlying algorithms may be optimised.

The confirmation of an address may be done by pressing a button. Another way is to give a spoken verification.

Nearby or neighbouring addresses may also be selected or confirmed and thereby provide means for calibration of the identification procedure or unit as such.

In one or more embodiments the personal guide system further comprises address record input unit configured to input information about an address into an address record.

Hereby an identified address may be updated with information relating to that address. Texts or a dictate about an address may be read, processed and stored for later retrieval.

In one or more embodiments the geographical position unit comprises a GPS unit interacting with satellites to obtain a geographical position. Thus providing a standard and readily available unit making use of a standardised Geographical Positioning System based on satellites.

In one or more embodiments the geographical position unit further comprises an interface for connection with a wireless network; and preferably with interpolation means for further improved estimation a geographical position; say by interpolation or by triangulation algorithms.

Thereby a private and potentially secure positioning system may be established. Another advantage is that this geographical positioning system may interact with a GPS system and further improve or complement the estimation of a current geographical location.

In one or more embodiments the orientation unit comprises units for detecting head yaw and/or head pitch; preferably by use of units such as an accelerometer gyroscope or alternatively compasses such as magnetometers.

Thereby, the estimation of orientation may be made easier and more precise than before.

In one or more embodiments the orientation unit is configured to be ear worn or head worn.

In one or more embodiments a further orientation unit is configured to be hand worn; such as a computational device embedded in a phone, a smart phone, a PDA, etc.

Hereby flexibility may be added to the system and may enable the use of a standardised computational unit in such hand worn device.

In a further aspect of the invention a method of receiving guide information to a user, is provided, the method comprising the steps of:
- estimating a geographical position of personal guide with a hearing device configured to be head worn by a user;
- estimating a line of interest as a best estimate as a function of an estimated orientation of a user's head;
- retrieving at least one address with an address record in the vicinity of the geographical position and along the line of interest of the user;
- selecting an address and retrieving the address record of the address; and
- controlling a speaker worn by the user to output spoken information on the retrieved address. Thus providing a method that may be implemented using off the shelf units, but also may be used in future improvements of existing units and new units performing the same or equivalent tasks of the units known at present.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

### Brief Description of Drawings

Embodiments of the invention will be described in the figures, whereon:
- Fig. 1: shows personal guide system implemented as a hearing device with an inertial orientation unit,
- Fig. 2: illustrates the orientation of a user and a line of interest;
- Fig. 3: illustrates a schematic of a personal guide unit;
- Fig. 4: illustrates an environment with databases/archives with which a personal guide system operates and interacts with;
- Fig. 5: illustrates the limitations of a map and a geographical positioning system as known;
- Fig. 6: illustrates the working of the personal guide system with an established line of interest and the establishment of an address as a result of exploring geographical coordinates along the line of interest; and
- Fig. 7: details the establishment of an address record of a particular address.

### Detailed Description

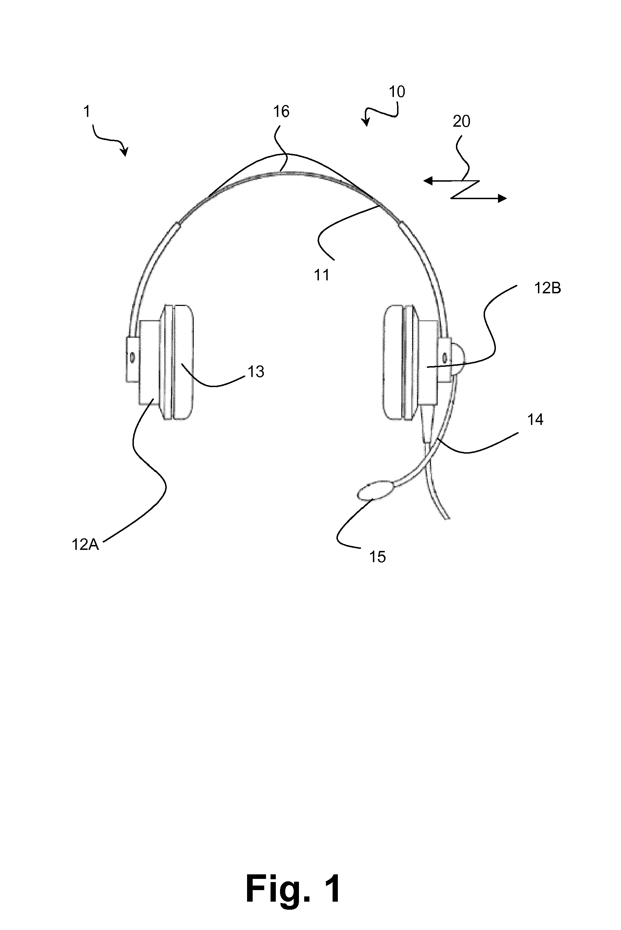

Fig. 1 shows an exemplary hearing device 10 of the personal guide system 1, having a headband 11 carrying two earphones 12A, 12B. This is similar to a conventional corded headset with two earphones interconnected by a headband.

Each earphone 12A, 12B of the illustrated hearing device 10 comprises an ear pad 13 for enhancing the user comfort and blocking out ambient sounds during listening or two-way communication.

A microphone boom 14 with a voice microphone 15 at the free end extends from an earphone 12B. The microphone 15 is used for picking up the user's voice e.g. during two-way communication via a mobile phone network and/or for reception of user commands to the personal navigation system 1.

The personal guide system 1 presented as a hearing device 10 has a communications system 20 for communication with external devices. This may be a Bluetooth link 20 or alike. A Bluetooth transceiver in the earphone is wirelessly connected by a Bluetooth link 20 to a Bluetooth transceiver a hand-held device (not shown).

A similar hearing device 10 may be provided without the microphone boom, whereby the microphone is provided in a housing on the cord as is well-known from prior art headsets.

An inertial measurement unit or orientation unit 16 is accommodated in a housing mounted on or integrated with the headband 11 and interconnected with components in the earphone housing through wires running internally in the headband 11 between the orientation unit 16 and the earphone 12.

The user interface of the hearing device 10 is not shown, but may include one or more push buttons, and/or one or more dials as is well-known from conventional headsets.

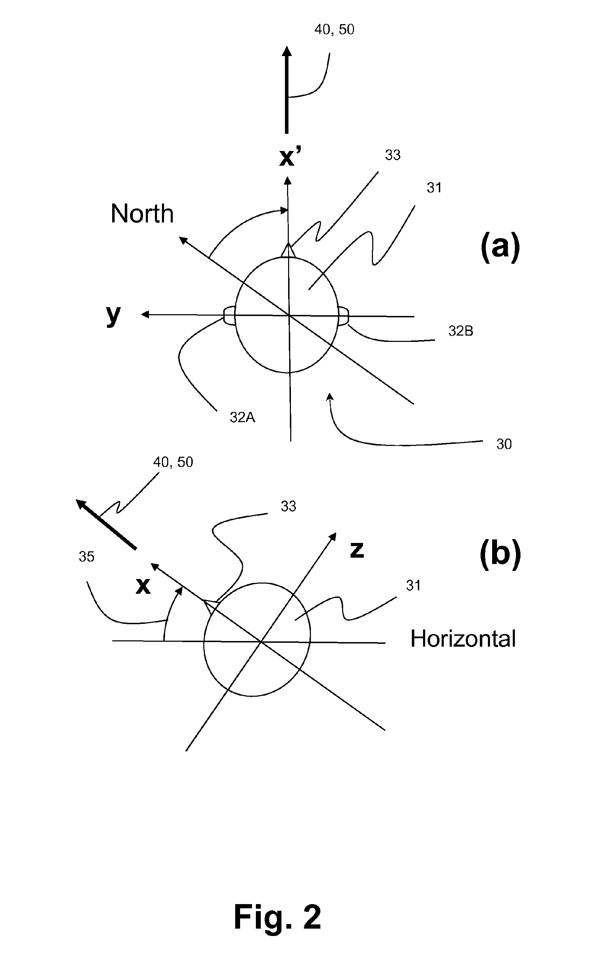

Fig. 2 shows the orientation of a user 30. For the sake of simplicity, the line of interest 50 is hereinafter a straight line in the direction of the nose of the user 30.

The orientation of the head of the user 30 is defined as the orientation of a head reference coordinate system with relation to a reference coordinate system with a vertical axis and two horizontal axes at the current location of the user. Basically and essentially, the direction of the nose of the user defines a viewing direction 40 and may be a starting direction, if not the preferred, of a line of interest 50, although the line of interest 50 also may be set at an angle relative to the viewing direction 40 or determined by a pointer device. In principle, the line of interest 50 may be any curve and in some cases a ballistic curve could be implemented as a line of interest 50.

Fig. 2(a) shows a head reference coordinate system that is defined with its centre located at the centre of the user's head 31, which is defined as the midpoint of a line drawn between the respective centres of the eardrums (not shown) of the left and right ears 32A, 32B of the user.

The x-axis of the head reference coordinate system is pointing ahead through a centre of the nose 33 of the user, its y-axis is pointing towards the left ear 32A through the centre of the left eardrum (not shown), and its z-axis is pointing upwards as is seen in figure 2(b) that illustrates the definition of head pitch 35. Head pitch 35 is the angle between the current x-axis and the horizontal plane.

From fig. 2(a) a definition of head yaw may be derived, where head yaw is the angle between the current x-axis' projection x' onto a horizontal plane at the location of the user 30, and a horizontal reference direction, such as Magnetic North or True North.

Finally a definition of head roll may be derived as the angle between the y-axis and the horizontal plane.

In figure 2(a) the line of interest 50 is aligned with the line of sight 40 and the orientation of the user 30 i.e. the direction of the nose 31.

It is noted that changing coordinate systems and aligning the coordinates is a matter of simple geometrical transformations readily available to the person skilled in the art. Likewise placing a headset 12 on the user 30 in an intended way will give a starting point of defining an orientation of a user 30 and thus a line of sight 40 and then for this embodiment define one line of interest 50.

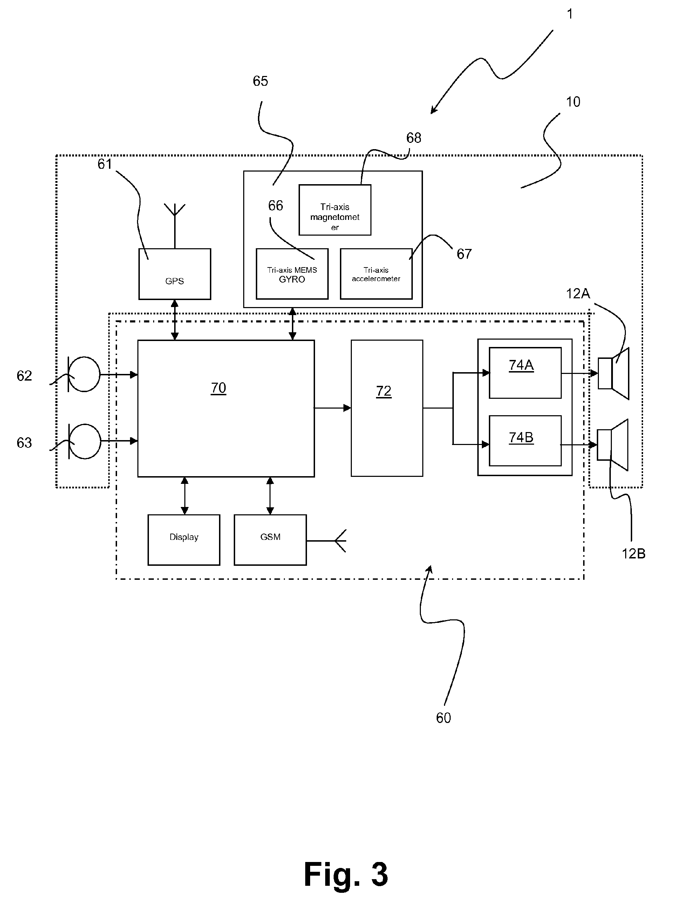

Fig. 3 shows a block diagram of a personal guide system 1 comprising a hearing device 10 and a hand-held device 60.

The various components of the system may be distributed otherwise between the hearing device 10 and the hand-held device 60. For example, the hand-held device 60 may accommodate the GPS-receiver 61.

Another system 10 may not have a hand-held device 12 so that all the components of the system are accommodated in the hearing device 10. The system without a hand-held device 60 does not have a display, and speech synthesis is used to issue messages and instructions to the user and speech recognition is used to receive spoken commands from the user.

The illustrated personal guide system 1 comprises a hearing device 10 comprising electronic components including two loudspeakers 12A, 12B for emission of sound towards the ears of the user (not shown), when the hearing device 10 is worn by the user in its intended operational position on the user's head.

It should be noted that in addition to the hearing device 10 shown in Fig, 1, the hearing device 10 may be of any known type including an Ear-Hook, In-Ear, On-Ear, Over-the-Ear, Behind-the-Neck, Helmet, Headguard, etc, headset, headphone, earphone, ear defenders, earmuffs, etc.

Further, the hearing device 10 may be a binaural hearing aid, such as a BTE, a RIE, an ITE, an ITC, a CIC, etc, binaural hearing aid.

The illustrated hearing device 10 has a voice microphone 62 e.g. accommodated in an earphone housing or provided at the free end of a microphone boom mounted to an earphone housing.

The hearing device 12 further has one or two ambient microphones 63, e.g. at each ear, for picking up ambient sounds.

The hearing device 10 has an orientation unit 63 positioned for determining head yaw, head pitch, and/or head roll, when the user wears the hearing device 10 in its intended operational position on the user's head.

The illustrated orientation unit 65 has tri-axis MEMS gyros 66 that provide information on head yaw, head pitch, and head roll in addition to tri-axis accelerometers 67 that provide information on three dimensional displacement of the hearing device 10.

The hearing device 10 also has a location unit, which in this case is a GPS-unit 61 for determining the geographical position of the user, when the user wears the hearing device 10 in its intended operational position on the head, based on satellite signals in the well-known way. Hereby, the user's current position and orientation may be provided to the user based on data from the hearing device 10.

Optionally, the hearing device 10 accommodates a GPS-antenna configured for reception of GPS-signals, whereby reception of GPS-signals is improved in particular in urban areas where, presently, reception of GPS-signals may be difficult.

In a hearing device 10 without the GPS-unit 61, the hearing device 10 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units may be difficult.

The illustrated orientation unit 65 also has a magnetic compass in the form of a tri-axis magnetometer 68 facilitating determination of head yaw with relation to the magnetic field of the earth, e.g. with relation to Magnetic North.

The hand-held device 60 of the personal guide system 1 has a computational unit 70 or a separate processor unit with input/output ports connected to the sensors of the orientation unit 65, and configured for determining and outputting values for head yaw, head pitch, and head roll, when the user wears the hearing device 10 in its intended operational position on the user's head.

The computational unit 70 may further have inputs connected to accelerometers of the orientation unit 65, and configured for determining and outputting values for displacement in one, two or three dimensions of the user when the user wears the hearing device 10 in its intended operational position on the user's head, for example to be used for dead reckoning in the event that GPS-signals are lost.

Thus, the illustrated personal navigation system 1 is equipped with a complete attitude heading reference system (AHRS) for determination of the orientation of the user's head that has MEMS gyroscopes, accelerometers and magnetometers on all three axes. The computational unit provides digital values of the head yaw, head pitch, and head roll based on the sensor data.

The hearing device 10 has a data interface for transmission of data from the orientation unit 65 to the computational unit 70 of the hand-held device 60, e.g. a smart phone with corresponding data interface. The data interface 20 may be a Bluetooth Low Energy interface.

The hearing device 10 further has a conventional wired audio interface for audio signals from the voice microphone 62, and for audio signals to the loudspeakers 12A, 12B for interconnection with the hand-held device 60 with corresponding audio interface.

This combination of a low power wireless interface for data communication and a wired interface for audio signals provides a superior combination of high quality sound reproduction and low power consumption of the personal guide system 1.

The hearing device 10 has a user interface, e.g. with push buttons and dials as is well-known from conventional headsets, for user control and adjustment of the hearing device 10 and possibly the hand-held device 60 interconnected with the hearing device 12, e.g. for selection of media to be played.

The hand-held device 60 receives head yaw from the orientation unit 65 of the hearing device 10 through the wireless interface 20. With this information, the hand-held device 10 may display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface of the hand-held device 60 to input information on a geographical position the user desires to visit in a way well-known from prior art hand-held GPS-units.

The hand-held device 60 may display maps with a suggested route to the desired geographical destination as a supplement to the aural guidance provided through the hearing device 10.

The hand-held device 60 may further transmit spoken guiding instructions to the hearing device 10 through the audio interfaces is well-known in the art, supplementing the other audio signals provided to the hearing device 10.

In addition, the microphone of hearing device 10 may be used for reception of spoken commands by the user, and the computational unit 70 may be configured for speech recognition, i.e. decoding of the spoken commands, and for controlling the personal guide system 10 to perform actions defined by respective spoken commands.

The hand-held device 60 filters the output of a sound generator 72 of the hand-held device 60 with a pair of filters 74A, 74B with an HRTF into two output audio signals, one for the left ear and one for the right ear, corresponding to the filtering of the HRTF of a direction in which the user should travel in order to visit a desired geographical destination.

This filtering process causes sound reproduced by the hearing device 10 to be perceived by the user as coming from a sound source localized outside the head from a direction corresponding to the HRTF in question, i.e. from a virtual sonar beacon located at the desired geographical destination.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted to follow a specific route determined by the personal guide system 1.

The sound generator 72 may output audio signals representing any type of sound suitable for this purpose, such as speech, e.g. from an audio book, radio, etc, music, tone sequences, etc.

The user may for example decide to listen to a radio station while walking, and the sound generator 72 generates audio signals reproducing the signals originating from the desired radio station filtered by pair of filters 74A, 74B with the HRTFs in question, so that the user perceives to hear the desired music from the direction towards the desired geographical destination to be visited at some point in time At some point in time, the user may decide to follow a certain route determined and suggested by the personal navigation system 10, and in this case the processor controls the HRTF filters so that the audio signals from the sound generator 24 are filtered by HRTFs corresponding to desired directions along streets or other paths along the determined route. Changes in indicated directions will be experienced at junctions and may be indicated by increased loudness or pitch of the sound. Also in this case, the user is relieved from having to visually consult a map in order to be able to follow the determined route.

In the event that the computational unit controls the sound generator 72 to output a tone sequence, e.g. of the same frequency, the frequency of the tones may be increased or decreased with distance to the desired geographical destination. Alternatively, or additionally, the repetition rate of the tones may be increased or decreased with distance to the desired geographical destination.

The personal guide system 1 may be operated without using the visual display, i.e. without the user consulting displayed maps, rather the user specifies desired geographical destinations with spoken commands and receives aural guidance by sound emitted by the hearing device 10 in such a way that the sound is perceived by the user as coming from the direction towards the desired geographical destination.

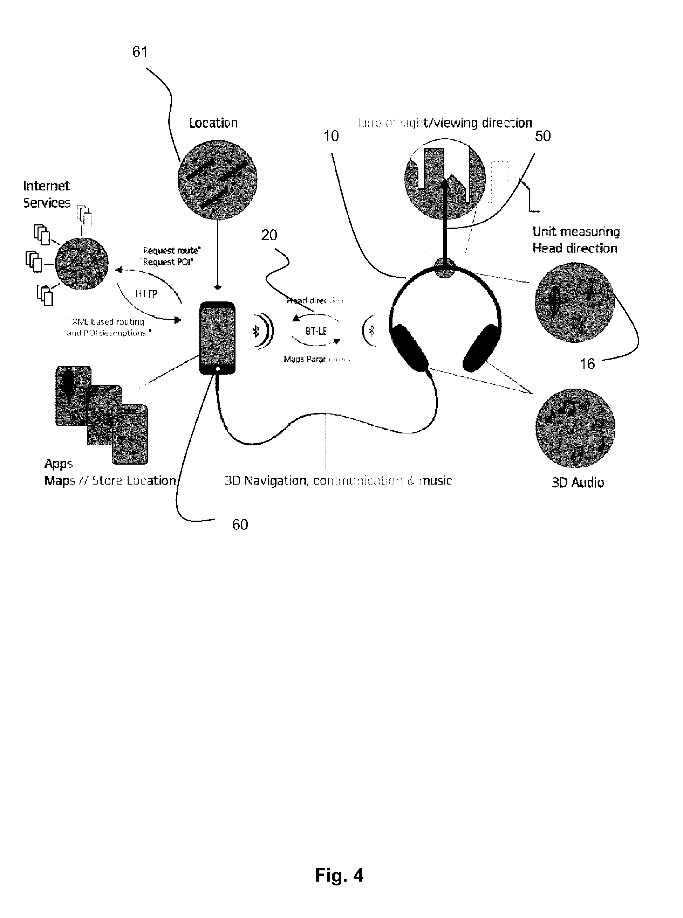

Fig. 4 illustrates the configuration and operation of an example of the personal guide system 1 shown in Fig. 3, with the hearing device 10 together with a hand-held device 60, which in the illustrated example is a smart phone, with a personal navigation app containing instructions for the processor or computational unit of the smart phone to perform the operations of the computational unit 70 of the personal guide system 1 and of the pair of filters 74A, 74B, with an HRTF. The hearing device 10 is connected to the smart phone 60 with a chord providing a wired audio interface between the two units 10, 60 for transmission of speech and music from the smart phone 60 to the hearing device 10, and speech from the voice microphone 62 (not shown) to the smart phone 60 as is well-known in the art.

As indicated in Fig. 4, and in continuation of fig. 3, by the various exemplary GPS-images displayed on the smart phone 60 display, the personal navigation app is executed by the smart phone in addition to other tasks that the user selects to be performed simultaneously by the smart phone 60, such as playing music, and performing telephone calls when required.

The personal navigation app configures the handheld device 60 for data communication with the hearing device 10 through a Bluetooth Low Energy wireless interface 20 available in the smart phone 60 and the hearing device 10, e.g. for reception of head yaw from the orientation unit 16 of the hearing device 10. In this way, the personal navigation app may control display of maps on the display of the smart phone 60 in accordance with orientation of the head of the user as projected onto a horizontal plane, i.e. typically corresponding to the plane of the map. For example, the map may be displayed with the position of the user at a central position of the display, and the head x-axis pointing upwards.

During navigation, the personal guide system 1 operates to position a virtual sonar beacon at a desired geographical location, whereby a guiding sound signal is transmitted to the ears of the user that is perceived by the user to arrive from a certain direction in which the user should travel in order to visit the desired geographical location. The guiding sound is generated by a sound generator 72 of the smart phone 60, and the output of the sound generator 72 is filtered in parallel with the pair of filters 74A, 74B of the smart phone 60 having an HRTF so that an audio signal for the left ear and an audio signal for the right ear are generated. The filter functions of the two filters approximate the HRTF corresponding to the direction from the user to the desired geographical location taking the yaw of the head of the user into account.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

At any time during use of the personal navigation system, the user may use the user interface to request a spoken presentation of a an address with an address record located along the line of interest which in this case is the field of view or line of sight of the user, e.g. by pushing a specific button located at the hearing device 10 as will be exemplified in the following figures.

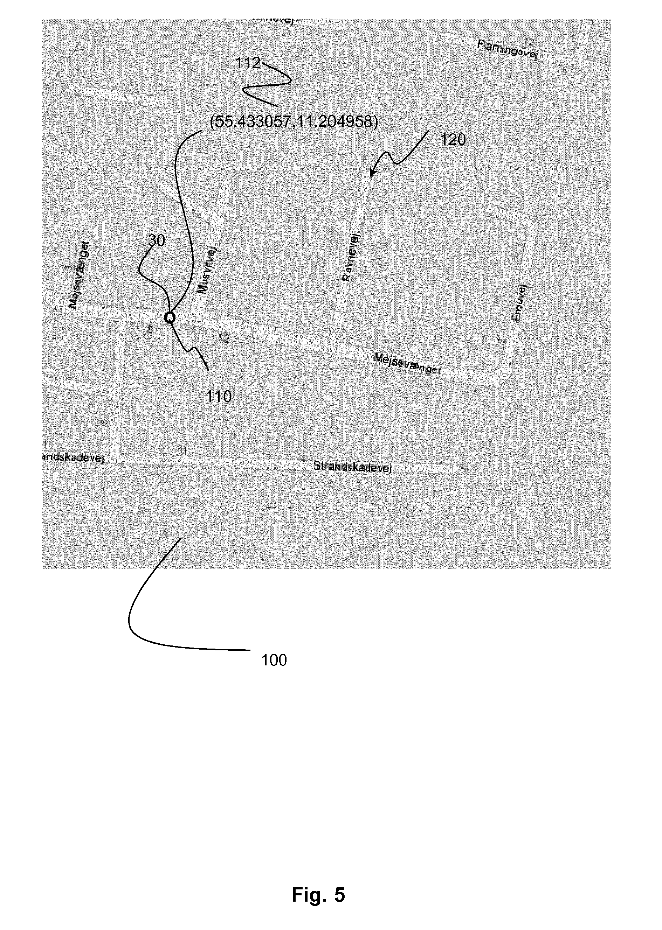

Fig. 5 shows a map 100 with a user 30 with a personal guide system 1 located at a geographical position 110 0 with a coordinate 112 such as a GPS coordinate (here 55.433057, 11.204958). The map 100 shows a road system 120 with names and an indication of numbers. For example Mejsevænget, Musvitvej, Emuvej, Ravnevej etc. Mejsevænget has indications of numbers 8 and 12 and Musvitvej an indication of where number 1 is. Only by actually being at the location and able to view the different houses, parcels and only if there is a number visibly may a user be sure to find a particular address. In most cases it works, but in many cases it does not work. Either because it is dark, because there no numbers are placed on the building, the land is empty or the premise is simply not visible due to a fence or alike.

In this case a user 30 will simply have to explore the vicinity of the current location 110 in order to navigate or guide in his local area.

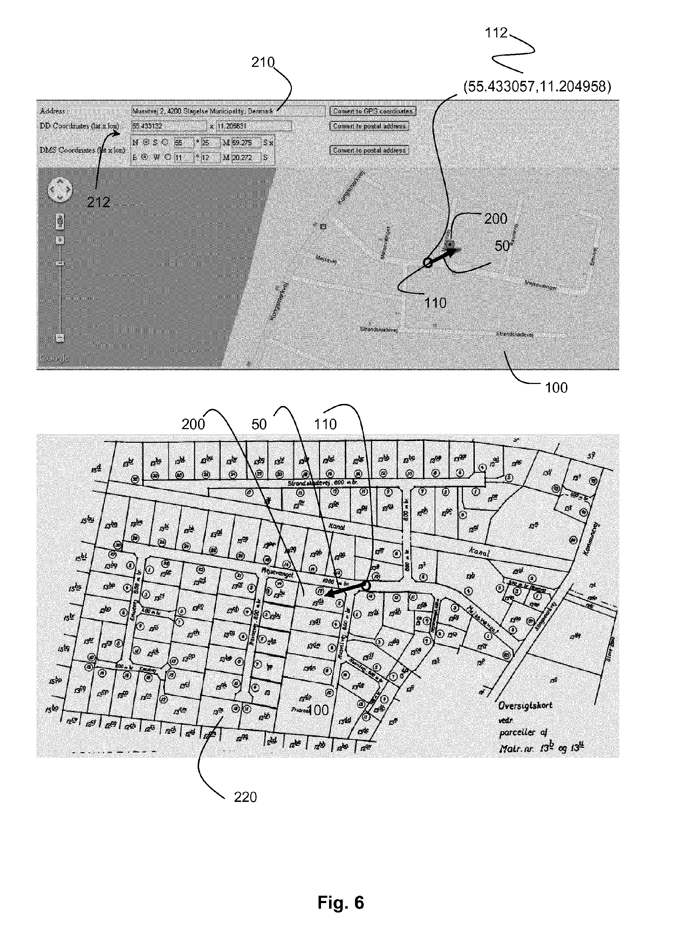

Fig. 6 shows an example of the working of the personal guide system 1 at a current geographical position 110 with a coordinate 112. From the current geographical position 110 the user 30 with a personal guide system as disclosed is oriented in a certain direction and presently with a current orientation and a line of interest 50 in the viewing direction. The computational unit 72 of the personal guide system 1 performs a best estimate of an address 200 along the line of interest 50 and returns an address record 210, here Musvitvej 2, 4200 Slagelse Municipality, Denmark covering an area of address coordinates 212.

In this particular case the address 200 is established by reference to a land registry as an address archive 220. In this case the actual address archive 220 contains data about matriculate parcels and road addresses. An address 200 is defined by an area defined by boundaries with geographical position coordinates.

The coordinate map 100 and the address archive 220 map are linked together by a number of fix-points and transformation between the maps is a matter of simple geometric transformations.

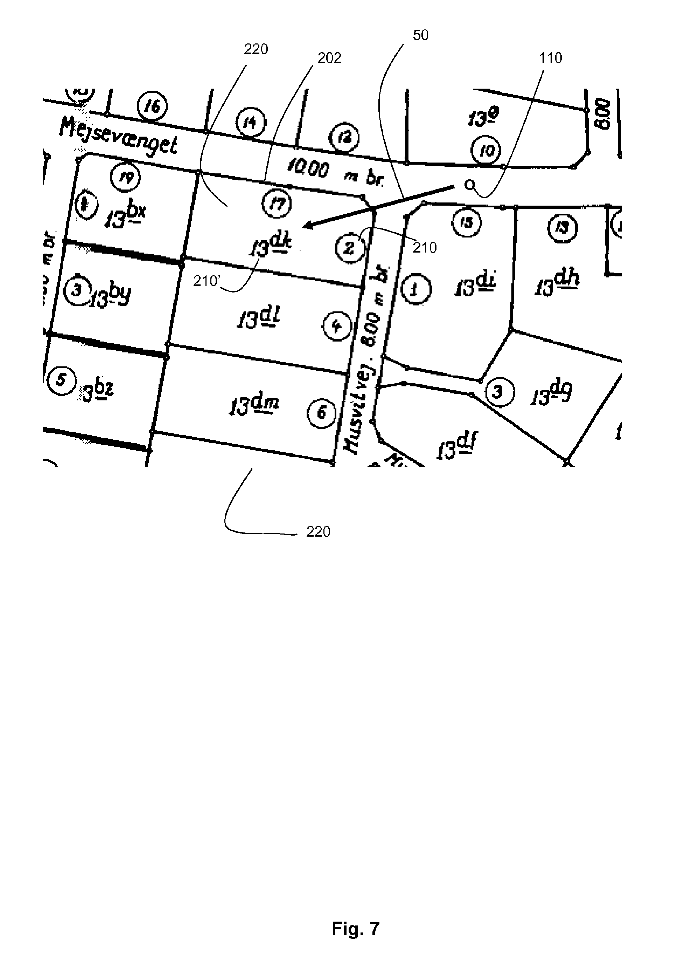

Fig. 7 is an enlarged view of fig. 6 and details crossing of the line of interest 50 of a boundary of a geographical area with a defined address thus establishing the address 200 with an address record 210 being "Musvitvej 2", which is concatenated with the information that the local address archive is from "4200 Slagelse Municipality, Denmark".

In this particular example, further matriculate data is associated with that area defined by boundaries 202. This address record 210' has a matriculate number "13dk", which then may be used for further look-op information about that particulate matriculate. This could be housing or building information, price information, technical information etc.

In another example the address 210, i.e. the postal address "Musvitvej 2" may be used to obtain information about phone numbers etc from a look-up in a phone directory.

A person skilled in the art will appreciate that this example is merely an example and that the invention extends to general addresses as spatially organised areas or volumes in a geographical environment.

As such a line of interest 50 established by a personal guide system 1 may by use of the same personal guide system 1 configured to contain or access archives or databases to identify an address 210 as a volume or area of geographical coordinates defined by a boundary and singled out by the crossing of the line of interest of the boundary.

## Claims

1. A personal guide system for use in a geographical environment, the personal guide system comprising
a hearing device configured to be head worn and having at least one speaker for emission of sound towards at least one ear of a user and accommodating an orientation unit for estimating a current orientation of a user's head when the user wears the hearing device in its intended operational position on the user's head,
a geographical position unit configured to estimate a geographical position of the personal guide system,
a computational unit configured for retrieving at least one address with an address record in the vicinity of the geographical position, estimating a line of interest for the user in the geographical environment and establishing at least one address as a best estimate along the line of interest for the user and the at least one address with an address record in the vicinity of the geographical position, and
controlling a sound generator to output audio signals with spoken information about the at least one address.

2. A personal guide system according to claim 1, wherein the at least one address with an address record is retrieved from an address archive.

3. A personal guide system according to claim 1 or claim 2, wherein personal guide system further comprises a retrieval system configured to access at least one address record archive linked to the address archive and containing at least one address record pertaining to an address.

4. A personal guide system according to claim 3, wherein the address record archive is a personal record archive, a phone directory archive, a land registry archive.

5. A personal guide system according to any of claims 1 to 4, wherein the processor uses an iterative process to estimate whether the line of interest intersects with a point that corresponds to an address; such as using a reverse geocoding algorithm.

6. A personal guide system according to any of claim 1 to 5, wherein the at least one computational unit further is configured for retrieving an address record and generating an audio signal with spoken information of the address record.

7. A personal guide system according to claim 6, wherein the at least one computational unit further is configured for sounding an alarm when an address is within a threshold distance of a predetermined address.

8. A personal guide system according to claim 7, wherein the at least one computational unit further is configured for sounding a guiding signal that will guide the line of interest towards a predetermined address.

9. A personal guide system according to claim 7 or 8, wherein the predetermined address is provided to the personal guide system by speech recognition system embedded or interacting with the computational unit.

10. A personal guide system according to any of claims 1 to 9, wherein the personal guide system further comprises an address confirmation unit configured to confirm an address by a user input; such as based on an actual address.

11. A personal guide system according to any of claims 1 to 10, wherein the personal guide system further comprises an address record input unit configured to input information about an address into an address record.

12. A personal guide system according to any of claims 1 to 11, wherein the geographical position unit comprises a GPS unit.

13. A personal guide system according to any of claims 1 to 12, wherein the geographical position unit further comprises an interface for connection with a wireless network; and preferably with interpolation means for further improved estimation of a geographical position; such as by interpolation or by triangulation algorithms.

14. A personal guide system according to any of claims 1 to 13, wherein the orientation unit comprises units for detecting head yaw and/or head pitch; such as by use of units such as an accelerometer gyroscopes or alternatively compasses such as magnetometers.

15. A personal guide system according to any of claims 1 to 14, wherein the orientation unit is configured to be ear worn or head worn; and configured such as Ear-Hook, In-Ear, On-Ear, Over-the-Ear, Behind-the-Neck, Helmet, Headguard, etc, headset, headphone, earphone, ear defenders, earmuffs, etc. Further, the hearing device may be a binaural hearing aid, or a monaural hearing aid, such as a BTE, a RIE, an ITE, an ITC, a CIC, etc, monaural or binaural hearing aid.

16. A personal guide system according to any of claims 1 to 14, wherein a further orientation unit is configured to be hand worn; such as a computational device embedded in a phone, a smart phone, a PDA, or any other handheld devices.

17. A method of receiving guide information to a user comprising the steps of:
- estimating a geographical position of personal guide with a hearing device configured to be head worn by a user;
- estimating a line of interest as a best estimate as a function of an estimated orientation of a user's head;
- retrieving at least one address with an address record in the vicinity of the geographical position and along the line of interest of the user;
- selecting an address and retrieving the address record of the address; and
- controlling a speaker worn by the user to output spoken information on the retrieved address.
